# EUROPEAN PATENT APPLICATION

(11) **EP 2 750 397 A1**
(43) Date of publication of application: **02.07.2014**
(21) Application number: 13179061.0
(22) Date of filing: 02.08.2013
(51) Int. Cl.: H04N 21/4147, H04N 21/442, H04N 21/462

(54) **Method and apparatus for recording contents**

(30) Priority: 27.12.2012 KR 20120154407
(71) Applicant: Humax Co., Ltd., Seongnam-si, Gyeonggi-do 463-825 (KR)
(72) Inventor: Lee, Kwang-D, Gangdong-su Seoul, 134-877 (KR)
(74) Representative: Vossius & Partner

(57) **Abstract**

The present invention relates to a method and apparatus for recording a content. An embodiment of the invention provides a method for recording a content that includes: determining a recording state of a first content through a first path; searching a second content corresponding to the first content through a second path according to the recording state of the first content through the first path; and recording or downloading the second content found by the search through the second path or providing a link by which to obtain the second content.

## Description

The present invention relates to a method and apparatus for recording a content, more particularly to a method and apparatus for recording a content using multiple paths.

A recording apparatus such as a PVR system, DVR system, etc., refers to a type of device that can record and replay digital broadcast programs.

Such a video recording apparatus may include a hard disk drive (HDD), for example, as a storage medium. A received broadcast program may be converted into digital signals and recorded on the hard disk drive, to be played again when needed.

Also, a recording apparatus that receives digital broadcasts may store EPG (electronic program guide) information, so that viewers can conveniently record or reserve a recording of a desired program by way of a menu screen related to the EPG.

With a recording apparatus, however, aberrant circumstances may occur in which the recording procedure cannot be performed, such as when there is a recording conflict, or when the power is turned off. In such circumstances, the user would not be able to view a program for which the recording procedure was not performed.

Korean Registered Patent No. 10-0696831 discloses a technique for a video recording system in which a recording reservation is set for a broadcast program of a series format. Based on the broadcast information of the broadcast program for which a recording reservation is set, if there are no episodes of the broadcast program that have not been recorded, then the broadcast program is recorded at the recording reservation time, but if there is an episode of the broadcast program that has not been recorded, then the corresponding episode of the broadcast program is searched and a recording reservation is set according to the rerun information of the broadcast program found by the search.

However, Korean Registered Patent No. 10-0696831 does not address the situation in which there is no rerun broadcasted for the broadcast program that was not recorded.

Thus, there is a demand for a method of efficiently recording a program or content that was not wholly recorded.

An objective of the invention is to provide a method and apparatus for recording a content that utilize multiple paths to efficiently record a content which needs to be recorded.

Another objective of the invention is to provide a method and apparatus for recording a content that changes the recording path according to the current state of content recording.

To achieve the objectives above, an embodiment of the invention provides a method for recording a content that includes: determining a recording state of a first content through a first path; searching a second content corresponding to the first content through a second path according to the recording state of the first content through the first path; and recording or downloading the second content found by the search through the second path or providing a link by which to obtain the second content.

To achieve the objectives above, an embodiment of the invention provides an apparatus for recording a content that includes: a recording-state determining unit configured to determine a recording state of a first content through a first path; a search unit configured to search a second content corresponding to the first content through a second path according to the recording state of the first content through the first path; a recording unit configured to record or download the second content found by the search through the second path or provide a link by which to obtain the second content; a communication unit configured to communicate through the first path and the second path; and a control unit configured to control the recording-state determining unit, the search unit, the recording unit, and the communication unit.

The method and apparatus for recording a content according to an embodiment of the invention can efficiently perform a content recording by suitably changing the recording path according to the current recording state.

According to an embodiment of the invention, the recording can be performed with greater efficiency by using any of a number of paths for a content that needs to be recorded.

Additional objectives, aspects, and advantages of the present invention will be set forth in part in the description which follows, and in part will be obvious from the description, or may be learned by practice of the invention.
FIG. 1 is a block diagram of a content recording apparatus related to an embodiment of the invention.
FIG. 2 is a flow diagram illustrating a method for recording a content related to an embodiment of the invention.
FIG. 3 is a diagram illustrating an example of a particular operation in the method for recording a content of FIG. 2.
FIG. 4 is a flow diagram illustrating an example of a particular operation in the method for recording a content of FIG. 2.
FIG. 5, FIG. 6, and FIG. 7 are diagrams illustrating examples of certain operations in the method for recording a content of FIG. 2.

A method and apparatus for recording a content related to an embodiment of the invention will be described below in more detail with reference to the accompanying drawings.

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

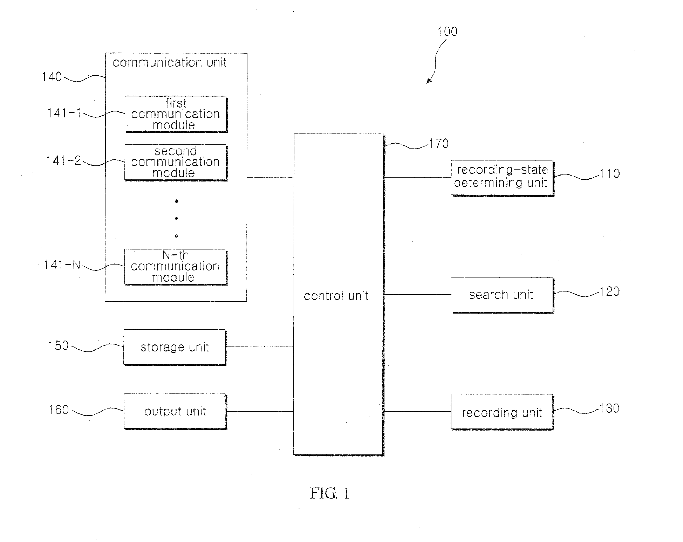

FIG. 1 is a block diagram of a content recording apparatus related to an embodiment of the invention.

The content recording apparatus 100 can be implemented in various forms. For example, the content recording apparatus 100 can include a personal video recorder (PVR). The personal video recorder is a next-generation recording device that has a hard disk drive (HDD) built into a set-top box or a TV set, so that the user is able to record broadcast programs up to a particular amount of time, according to the capacity of the HDD, without a VCR. The recording apparatus 100 can be implemented in the form of a mobile terminal. The mobile terminal can include a digital broadcast terminal.

As illustrated in FIG. 1, the content recording apparatus 100 can include a recording-state determining unit 110, a search unit 120, a recording unit 130, a communication unit 140, a storage unit 150, an output unit 160, and a control unit 170.

The recording-state determining unit 110 can determine the recording state of a content through a first path (e.g. a path for satellite connection). The recording state can include the recorded state of the content for which a recording is currently being performed, the state of the content for which a recording is desired, and so on. In particular, the recording state can determine whether or not it is possible to record a content. For example, the recording-state determining unit 110 can recognize cases in which the recording of a first content cannot be performed due to external circumstances, such as in the event of a recording conflict, the power turned off, a lack or a related link of storage space, etc.; cases in which the recording of the first content cannot be performed due to the properties of the content itself (e.g. when the content to be recorded is a previous content that was broadcasted before); or cases in which a recording is halted due to another recording (e.g. when the recording of another, important content is requested), and the like.

The search unit 120 can search for the content to be recorded through a second path (e.g. a path for Internet connection). For example, the search unit 120 can search for a second content corresponding to the first content through the second path. The second corresponding to the first content can include contents found by a search based on an identifier of the first content. An identifier for the first content can include at least one of a series identifier, an episode identifier, and the first number's title, run number, synopsis, image, and metadata (which can be used when the first content and the second content are produced by the same company, etc.). Here, the image can be the image at the time the recording was halted. The second path can be a path that utilizes a completely different communication module from that of the first path or a path that utilizes the same communication module as the first path. For example, if the first content is a broadcast content, the search unit 120 can use a program guide to search for the second content on a broadcast channel different from the broadcast channel that provides the first content.

According to an embodiment of the invention, the search unit 120 can assign a designated site, such as YouTube, for instance, as a prioritized search site. For example, the search unit 120 can access YouTube, and YouTube can search the second content related to the first content by using text related to the first content and provide the search result to the search unit 120.

However, there is a possibility of there being a multiple number of second contents that are related to the first content, and in this case, the user can configure the search options beforehand, so that the search unit 120 can search for the optimal second content from among the multiple second contents. For example, the user can pre-configure the settings of YouTube as regards the picture quality, cost, etc.

The recording unit 130 can perform the recording of a content. For example, the recording unit 130 can record the first content through the first path or record the second content through the second path.

According to an embodiment of the invention, the recording unit 130 can record the first content through the first path at a pre-designated time according to a recording reservation, and if the recording of the first content is impossible, can record the second content through a second path.

According to another embodiment of the invention, if it becomes impossible to perform the recording while the recording unit 130 is recording the first content, then the search unit 120 can connect the recording unit 130 to a site of the second path that provides the second content. In this case, the recording unit 130 can record the second content or download the second content. Also, in cases where there is insufficient storage space for a recording, for example, the recording unit 130 can provide the user with only the information related to a link from which the second content can be downloaded, instead of actually recording or downloading the second content.

According to still another embodiment of the invention, if the recording is halted while the recording unit 130 is recording the first content, the recording unit 130 can continuously attempt to record the first content through the first path while recording or downloading the second content through the second path. If it is continuously impossible to record the first content, then only the second content would be recorded and stored in the content recording apparatus 100, but if it becomes possible again to record the first content, then the first content and the second content can both be recorded. In cases where the first content and the second content are both recorded, the content recording apparatus 100 can store both the first content and the second content or can delete one of them. The recording through the first path can be a recording of a broadcast, so that the first content may generally have a better picture quality compared to the second content. In this case, it may be preferable to delete the second content.

If it becomes possible again to record the first content, the recording unit 130 can also stop the recording of the second content and afterwards delete the recorded portion or store only the related link.

According to yet another embodiment of the invention, if it becomes impossible to record the first content, the recording unit 130 can search the second content through multiple second paths, and the recording unit 130 can record the second content through the second path that provides the second content in an optimal manner. The selection of a particular second path from among the multiple second paths can also be performed by the user. For example, the user can be provided with the picture quality information and cost information for the second contents through the multiple second paths, after which the user can consider the picture quality information and cost information to select the desired second path.

The communication unit 140 can perform communication through multiple communication paths. For example, the communication unit 140 can be equipped with a multiple number of communication modules (first communication module 141-1, second communication module, ... , N-th communication module 141-N) with multiple communication paths configured in correspondence to the respective communication modules to perform communication.

The storage unit 150 can group and store the contents recorded by various methods. The storage unit 150 can divide the storage space in correspondence to the specific paths connected for recording and can store the recorded contents classified into groups. For example, a first area can store contents recorded through the first path, while a second area can store contents recorded through the second path. Also, if certain recorded contents belong to a series, the contents corresponding to the same series can be grouped together to be stored in the same area.

The output unit 160 can output a list of recorded contents on an external display apparatus (not shown) connected with the recording apparatus 100 or on a display device (not shown) built into the recording apparatus 100, allowing the user to check the list. The output unit 160 can be a component of the content recording apparatus 100 or the display unit of a terminal, e.g. a smart phone, connected with the content recording apparatus 100.

The control unit 170 can control the overall operations of the recording-state determining unit 110, search unit 120, recording unit 130, communication unit 140, storage unit 150, and output unit 160.

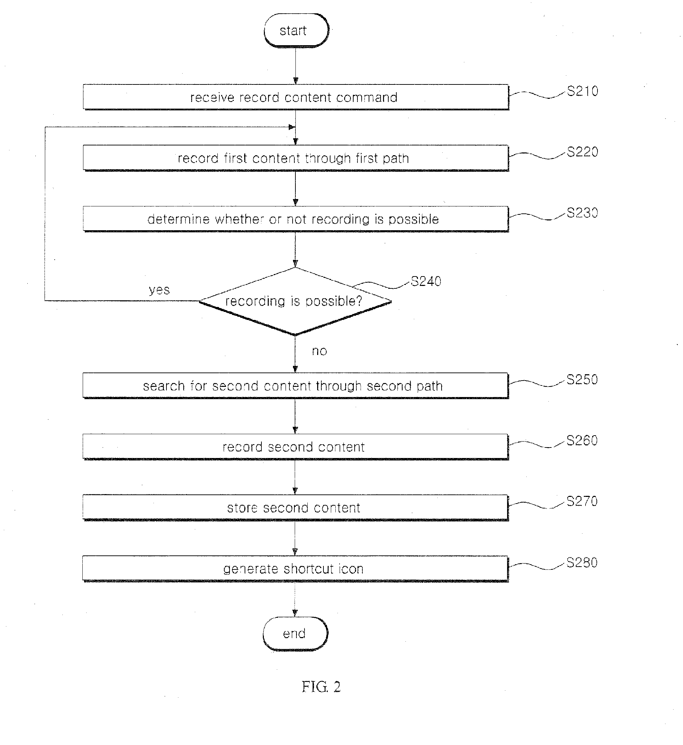

FIG. 2 is a flow diagram illustrating a method for recording a content related to an embodiment of the invention. In the following, the description of the method for recording a content will be provided for an example in which the content is an episode content of a series content. A series content refers to contents made up of multiple episode contents. For example, Terminator 1, Terminator 2, Terminator 3, etc., can each be considered an episode of a series content. Also, the descriptions that follow will make references to a path for satellite connection (referred to herein as a "first path" for convenience) and a path for Internet connection (referred to herein as a "second path" for convenience) as paths by which contents may be received, but it is to be appreciated that the invention is not thus limited.

The content recording apparatus 100 can receive a record content command (S210). The record content command can be received from an input device. The input device can be implemented as an element separate from the content recording apparatus 100 or as an element of the content recording apparatus 100. If the content is a broadcast content, the record command can be received through a program guide (EPG).

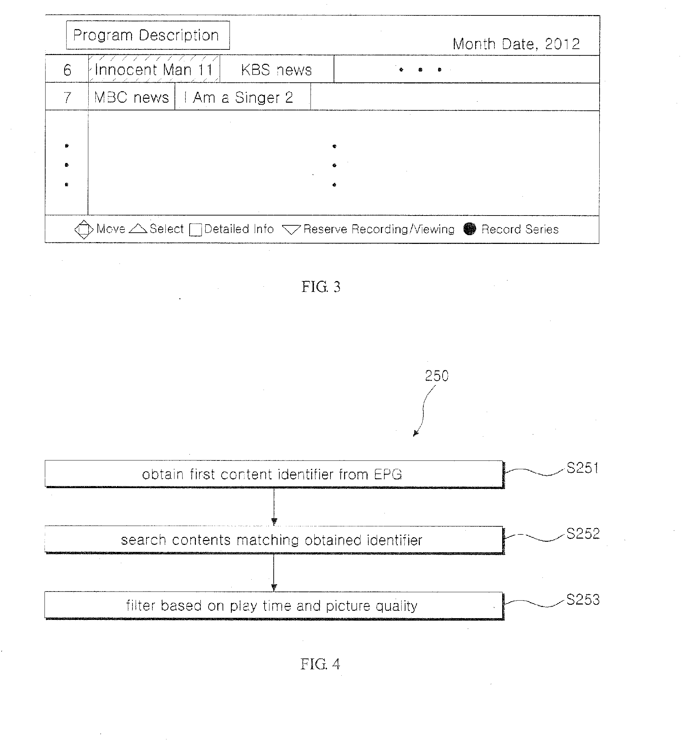

FIG. 3 illustrates an example of receiving a content recording command in the method for recording a content of FIG. 2.

As illustrated, the program guide may show a list of programs, and the user can select a particular program from among the multiple programs to execute various menu instructions. For example, the user can select "Innocent Man 11" of channel 6 on the illustrated program guide and can execute a series recording or set a recording reservation. A series recording refers to recording all or some of the episodes contents composing the series. For instance, supposing that the "Innocent Man" series consists of Innocent Man 1 to Innocent Man 20, recording all of the episodes from Innocent Man 1 to Innocent Man 20 would be to record all of the episode contents, whereas recording only some of the episodes (Innocent Man 11 to Innocent Man 20) would be to record some of the episode contents.

Upon receiving a record command, the recording unit 130 can perform a series recording through a first path. For example, a first content corresponding to a particular episode can be received through the first path and recorded (S220).

Before or during operation S220, the recording-state determining unit 110 can determine the recording state (in this embodiment, whether or not recording is possible) of the first content (S230). The recording-state determining unit I10 can recognize cases in which the recording of the first content cannot be performed due to external circumstances, such as in the event of a recording conflict, the power turned off, etc., cases in which the recording of the first content cannot be performed due to the properties of the content itself (e.g. when the content to be recorded is a previous content that was broadcasted before), and the like, to determine whether or not recording is possible. Also, the recording-state determining unit 110 can recognize when a recording of the first content is halted.

If recording is possible, the recording unit 130 can receive the first content through the first path to perform the recording.

If recording is not possible, the search unit 120 can search for a second content or a related link that can be received through a second path to be recorded (S240, S250). The second content can be a content corresponding to the first content, including contents having the same or a similar series name and episode name as the first content. The second path can be configured to a default setting and can be automatically chosen according to connection states. For example, a path for Internet connection can be designated as the second path, or the path for Internet connection can be chosen automatically from among multiple paths in consideration of the connection state for each path.

Of course, even though a recording is not possible, the recording unit 130 can re-attempt to perform the recording through the first path after a particular amount of time has passed. If it is determined again that recording is possible, the recording unit 130 recording the second content through a second path, after having determined that recording was impossible, can halt the recording of the second content or continue with the recording.

FIG. 4 is a flow diagram illustrating an example of an operation for searching the second content in the method for recording a content of FIG. 2.

If the recording of the first content through the first path becomes impossible, the search unit 120 can obtain an identifier of the first content from a program guide (S251). The identifier for the first content can include a series identifier, an episode identifier, and the like. For example, if the first content is "Innocent Man 11_Return of the King," the series identifier can include "Innocent Man," and the episode identifier can include "11" or "Return of the King." Also, the first content identifier can further include a property (e.g. play time, picture quality, etc.) of the content by which to identify the first content.

The search unit 120 can search through a second path for a second content that matches the first content identifier obtained from the program guide (S252). A content that matches the identifier can include a content that is the same as the obtained identifier. Also, the second content matching the first content identifier can include a content that is similar to the obtained identifier (e.g. a content that has the same series identifier and episode identifier but has a different picture quality).

Also, the search unit 120 can filter the searched second contents based on certain criteria (S253). For example, the search unit 120 can filter the second content found by the search in consideration of at least one of play time and picture quality. Thus, by way of the filtering, the search unit 120 can extract a content having a higher picture quality or a relatively longer play time. Also, according to an embodiment of the invention, the contents found by the search can be arranged according to certain criteria (e.g. picture quality or play time, etc.), allowing the user to make the selection.

Of course, the user can pre-configure the search options through the second path, and the search unit 120 can select the optimal second content according to the search options.

The recording unit 130 can receive and record or download through the second path the second content extracted by way of the search unit 120 (S260).

When the recording or the downloading of the second content is completed, the control unit 170 can store the second content in an area of the storage unit 150 (S270). The control unit 170 can store the recorded or downloaded second content by classifying the contents according to various criteria. For example, the control unit 170 can gather the episodes of which the series identifier is "Innocent Man" and store them in a particular area, or gather only the episodes of which the series identifier is "Innocent Man" and the reception path is an Internet connection and store them in a particular area.

Also, the control unit 170 can generate a shortcut icon by which to directly approach the particular area in which the episodes are gathered (S280).

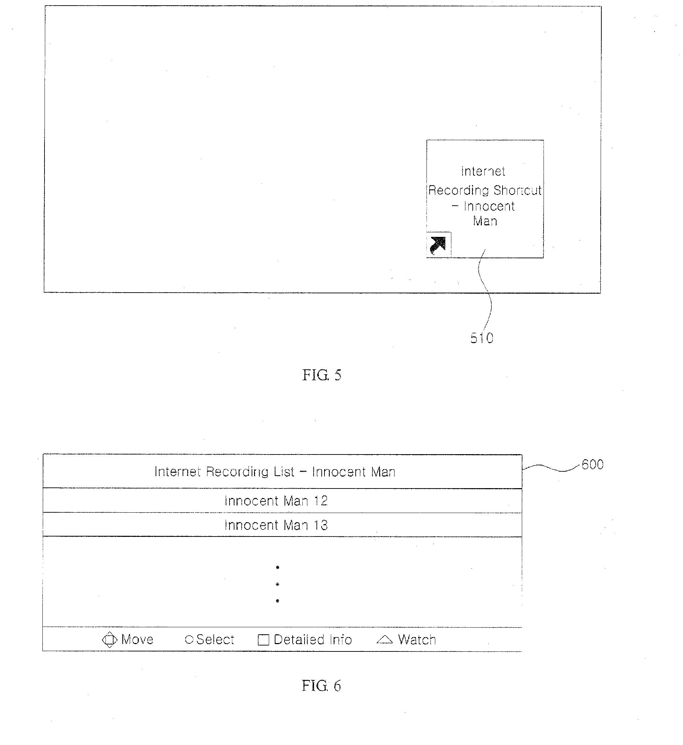

FIG. 5 illustrates an example of a shortcut icon.

As illustrated, the control unit 170 can generate a shortcut icon 510 by which to directly approach a particular area in which the episodes are gathered, and can output it through the display screen. By using the shortcut icon 510, the user can check the recorded series contents in a convenient manner.

According to an embodiment of the invention, the recording apparatus 100 can provide a list of recorded contents through the output unit 160 to allow the user to check the list in a convenient manner. The output unit 160 can output the recorded content list on an external display apparatus (not shown) connected with the recording apparatus 100 or on a display device (not shown) built into the recording apparatus 100, allowing the user to check the list.

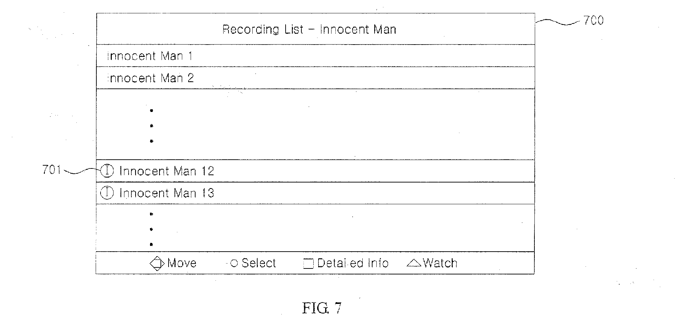

FIG. 6 and FIG. 7 illustrate examples of recorded content lists. The recorded content list 600 illustrated in FIG. 6 shows a list of episode contents that were recorded through a particular path (e.g. the Internet), while FIG. 7 illustrates a list 700 showing the recorded episodes of a particular series. In FIG. 7, the reference number 701 illustrates an icon representing a particular recording path (e.g. the Internet).

From a recorded content list such as that illustrated in FIG. 6 or FIG. 7, the user can check the recording path of a corresponding content.

In an embodiment of the invention, the first path and the second path can be configured to default settings, be selected by the user, or be automatically chosen according to the connection states.

As described above, the recording apparatus and recording method according to an embodiment of the invention can efficiently record a content by suitably changing the recording path according to the current recording state.

The method of recording contents described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software.

Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc.

Examples of a computer-readable medium can also include a transmitting medium such as light, metal lines, waveguides, etc., that transmits signals for specifying program instructions, data structures, etc.

Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The method and apparatus for recording contents described above are not to be limited to the embodiments disclosed herein. The features of the embodiments can be selectively combined to allow for numerous variations.

## Claims

1. A method for recording a content, the method comprising:
determining a recording state of a first content through a first path;
searching a second content corresponding to the first content through a second path according to the recording state of the first content through the first path; and
recording or downloading the second content found by the search through the second path or providing a link by which to obtain the second content.

2. The method of claim 1, wherein the searching of the second content is performed when a recording of the first content through the first path is impossible.

3. The method of claim 2, wherein the searching of the second content includes:
obtaining an identifier for the first content from an electronic program guide (EPG); and
searching a content through the second path based on the obtained identifier.

4. The method of claim 2 or 3, wherein the searching of the second content further includes:
filtering the second content found by the search in consideration of at least one of play time, picture quality, and cost.

5. The method of claim 2, 3, or 4, further comprising:
generating a shortcut icon for directly approaching a particular storage space in which the recorded second content is stored.

6. The method of any one of claims 2 to 5, wherein the first path is a path for satellite connection, and the second path is a path for Internet connection.

7. The method of any one of claims 2 to 6, wherein an identifier for the first content includes a series identifier, an episode identifier, a title, a run number, a synopsis, an image, or metadata.

8. The method of any one of claims 2 to 7, wherein the second path is selected in consideration of connection state or search option.

9. The method of any one of claims 2 to 8, wherein, in the event that the recording of the first content through the first path is impossible, a recording of the first content through the first path is attempted again while the second content is recorded through the second content.

10. An apparatus for recording a content, the apparatus comprising:
a recording-state determining unit configured to determine a recording state of a first content through a first path;
a search unit configured to search a second content corresponding to the first content through a second path according to the recording state of the first content through the first path;
a recording unit configured to record or download the second content found by the search through the second path or provide a link by which to obtain the second content;
a communication unit configured to communicate through the first path and the second path; and
a control unit configured to control the recording-state determining unit, the search unit, the recording unit, and the communication unit.

11. The apparatus of claim 10, wherein the search unit performs a search of the second content through the second path when a recording of the first content through the first path is impossible or halted.

12. The apparatus of claim 10 or 11, wherein the search unit obtains an identifier for the first content from an electronic program guide (EPG) and searches a content through the second path based on the obtained identifier.

13. The apparatus of claim 10, 11, or 12, wherein the search unit filters the second content found by the search in consideration of at least one of play time, picture quality, and cost.

14. The apparatus of any one of claims 10 to 13, wherein the control unit generates a shortcut icon for directly approaching a particular storage space in which the recorded second content is stored.

15. The apparatus of any one of claims 10 to 14, wherein the recording unit reattempts a recording of the first content through the first path while recording the second content through the second content, in the event that the recording of the first content through the first path is impossible.
